(19) Europäisches Patentamt
European Patent Office
Office européen des brevets

(11) **EP 1 338 068 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(21) Anmeldenummer: **01999033.2**

(22) Anmeldetag: **21.11.2001**

(51) Int Cl.:
***H02H 7/18*** *(2006.01)*

(86) Internationale Anmeldenummer:
**PCT/DE2001/004390**

(87) Internationale Veröffentlichungsnummer:
**WO 2002/045247 (06.06.2002 Gazette 2002/23)**

(54) **GLEICHSTROMVERSORGUNGSEINRICHTUNG UND VERFAHREN ZUM ABSCHALTEN EINES BRENNSTOFFZELLENBLOCKS**

DIRECT-CURRENT POWER SUPPLY DEVICE AND METHOD FOR SHUTTING DOWN A FUEL CELL BLOCK

DISPOSITIF D'ALIMENTATION EN COURANT CONTINU ET PROCEDE DE MISE HORS-CIRCUIT D'UN BLOC DE PILES A COMBUSTIBLE

(84) Benannte Vertragsstaaten:
**DE FR GB IT**

(30) Priorität: **30.11.2000 DE 10059393**

(43) Veröffentlichungstag der Anmeldung:
**27.08.2003 Patentblatt 2003/35**

(73) Patentinhaber: **Siemens Aktiengesellschaft
80333 München (DE)**

(72) Erfinder:
• **LERSCH, Josef
91336 Heroldsbach (DE)**
• **BETTE, Willi
91056 Erlangen (DE)**
• **STRASSER, Karl
91058 Erlangen (DE)**

(56) Entgegenhaltungen:
WO-A-00/02283    WO-A-97/48143
GB-A- 2 129 237    US-A- 5 105 142

EP 1 338 068 B1

**Beschreibung**

Die Erfindung betrifft eine Gleichstromversorgungseinrichtung gemäß Oberbegriff des Anspruchs 1; eine derartige Gleichstromversorgungseinrichtung ist durch die GB 2 129 237 A bekannt.

Ein Brennstoffzellenblock umfasst eine Vielzahl von Brennstoffzellen sowie Einrichtungen zur Versorgung und Überwachung der Brennstoffzellen. Die Brennstoffzellen können röhrenförmig oder als Platten ausgestaltet sein. In einer Brennstoffzelle wird durch die Zusammenführung von Wasserstoff ($H_2$) und Sauerstoff ($O_2$) in einer elektrochemischen Reaktion elektrische Energie und Wärme erzeugt, wobei sich der Wasserstoff und der Sauerstoff zu Wasser ($H_2O$) verbinden. Hierfür werden der Brennstoffzelle Betriebsgase zugeführt, die beispielsweise ein wasserstoffhaltiges Brenngas und Luft sein können oder Wasserstoff und Sauerstoff in ihrer reinen Form. Die Art dieser Betriebsgase, die der Brennstoffzelle zugeführt werden, hängt wesentlich von der Betriebsumgebung ab, in der sie betrieben werden. Werden sie beispielsweise in einem hermetisch verschlossenen Raum betrieben, so ist darauf zu achten, dass sie eine möglichst geringe Menge an Abgasen erzeugen. In einem solchen Fall werden die Brennstoffzellen daher mit reinem Sauerstoff und reinem Wasserstoff betrieben. Als Betriebsgase werden der Brennstoffzelle also reiner Wasserstoff und reiner Sauerstoff zugeführt, mit dem Ziel, dass diese Betriebsgase während des Betriebs des Blocks im wesentlichen rückstandsfrei zu Wasser reagieren und die Brennstoffzellen somit so gut wie keine Abgase erzeugen.

Die Brennstoffzellen eines Brennstoffzellenblocks sind elektrisch in Reihe geschaltet und erzeugen während des Betriebs Gleichstrom. Ein Brennstoffzellenblock ist somit wesentlicher Bestandteil einer Gleichstromversorgungseinrichtung, deren Strom beispielsweise in ein Gleichstromnetz eingespeist wird, oder die ein Antriebsaggregat oder einen Akkumulator mit Gleichstrom versorgt. Genauso gut kann die Gleichstromversorgungseinrichtung auch mit einem Stromsteller verbunden sein, der den Gleichstrom aus der Stromversorgungseinrichtung in gewünschter Art und Weise transformiert.

Zum Abschalten des Brennstoffzellenblocks nach einem regulären Betrieb wird die Betriebsgaszufuhr zu dem Brennstoffzellenblock unterbrochen. Ohne weitere Verfahrensschritte zum Abschalten des Brennstoffzellenblocks würde er in diesem Zustand ruhen, bis wieder Leistung angefordert und somit die Betriebsgaszufuhr wieder geöffnet wird. In einem solchen Ruhezustand verbleiben jedoch noch Reste der Betriebsgase in den Gasräumen der Brennstoffzellen des Brennstoffzellenblocks. Diese Reste werden im Folgenden als Restgase bezeichnet. Die Restgase in den Brennstoffzellen diffundieren sehr langsam durch die Elektroden-Elektrolyt-Einheit der Brennstoffzellen hindurch und reagieren an den Elektroden der Brennstoffzellen unter Wärmeerzeugung zu Wasser.

Da keine stöchiometrische Verteilung der Restgasmengen in den abgeschalteten Brennstoffzellen vorliegt und da die Betriebsgasräume von Sauerstoff und Wasserstoff in den Brennstoffzellen üblicherweise in etwa gleich groß sind, bleibt Sauerstoff in den Brennstoffzellen zurück und ist schießlich in beiden Gasräumen der Brennstoffzellen mit gleichem Druck vorhanden. Ein solcher Ruhezustand mit verbliebenem Sauerstoff ist zu vermeiden, da Sauerstoff zu einer ungewünschten Alterung der Brennstoffzellen beiträgt.

Es ist die Aufgabe der vorliegenden Erfindung, eine Gleichstromversorgungseinrichtung der eingangs genannten Art anzugeben, mit der die Gasräume der Brennstoffzellen innerhalb einer kurzen Zeit nach einer Unterbrechung der Betriebsgaszufuhr zu den Brennstoffzellen von Sauerstoff und Wasserstoff befreit werden können.

Diese Aufgabe wird erfindungsgemäß durch eine Gleichstromversorgungseinrichtung gemäß Patentanspruch 1 gelöst.

Die Abschalt-Schutzeinrichtung kann hierbei außerhalb des Brennstoffzellenblocks oder in den Block integriert oder teilweise innerhalb und außerhalb des Brennstoffzellenblocks angeordnet sein.

Die Erfindung geht von der Überlegung aus, dass die Restgase aus den Gasräumen der Brennstoffzellen durch eine Evakuierung der Gasräume effektiv entfernt werden. Bei einem in einem hermetisch abgeschlossenen Raum betriebenen Brennstoffzellenblock, beispielsweise bei einem in einem Unterseeboot betriebenen Brennstoffzellenblock, besteht hierbei allerdings das Problem, dass die Restgase entweder in die Umgebung des Blocks abgegeben werden oder gespeichert, insbesondere komprimiert werden müssen. Die Speicherung und Komprimierung der Restgase ist jedoch aufwendig und das Abgeben der Restgase an die Umgebung des Brennstoffzellenblocks ist insbesondere in Unterseebooten nicht zulässig. Außerdem erfordert das Evakuieren der Gasräume der Brennstoffzellen zusätzlichen apparativen Aufwand.

Die Erfindung geht daher in einem zweiten Schritt von der Überlegung aus, dass eine Evakuierung der Gasräume der Brennstoffzellen erreicht werden kann, wenn als Betriebsgase reiner Sauerstoff ($O_2$) und reiner Wasserstoff ($H_2$) verwendet wird und diese Betriebsgase nach einer Unterbrechung der Betriebsgaszufuhr zu den Brennstoffzellen in der elektrochemischen Reaktion vollständig zu Wasser ($H_2O$) umgesetzt werden. Dies ist jedoch nur möglich, wenn der dabei entstehende elektrische Strom aus den Brennstoffzellen abgeführt wird. Wird jedoch von der Gleichstromversorgungseinrichtung kein elektrischer Strom mehr angefordert, beispielsweise weil der Stromkreis der Gleichstromversorgungseinrichtung mit einer elektrischen Last unterbrochen ist, kann die elektrochemische Reaktion in den Brennstoffzellen nur aufrechterhalten werden, wenn der dabei entstehende elektrische Strom in einem zusätzlichen Stromkreis verbraucht wird. Die Erfindung geht nunmehr von der weiteren Überlegung aus, dass mit einem dem Brennstoffzellenblock parallel zugeschalteten elektrischen Widerstand ein solcher Stromkreis eingerichtet ist und der Strom aus der Restgasreaktion aus den Brennstoffzellen am elektrischen Widerstand in Wärme umgewandelt und somit verbraucht wird. Im Folgenden wird ein dem Brennstoffzellenblock parallel zugeschalteter Widerstand auch als Entladewiderstand und der Verbrauch der Restgase auch als Entladung bezeichnet.

Wie oben beschrieben wird durch das Zuschalten eines elektrischen Widerstands parallel zum Brennstoffzellenblock die elektrochemische Reaktion im Brennstoffzellenblock aufrecht erhalten, wodurch Betriebsgase in den Gasräumen des Brennstoffzellenblocks verbraucht werden. Für ein vollständiges Entfernen der Betriebsgase aus den Gasräumen ist es notwendig, dass als Betriebsgase reiner Sauerstoff und reiner Wasserstoff verwendet wird und diese Gase vollständig miteinander reagieren. Da jedoch Wasserstoff und Sauerstoff nicht im stöchiometrischen Verhältnis - also im Verhältnis 2:1 - in den Gasräumen der Brennstoffzellen des Brennstoffzellenmoduls vorliegen, wird zum Abschalten des Brennstoffzellenblocks zuerst die Zufuhr eines ersten Betriebsgases unterbrochen, beispielsweise die Zufuhr von Sauerstoff, wohingegen die Zufuhr von Wasserstoff aufrecht erhalten bleibt. Durch die Entladung des Brennstoffzellenblocks über den Entladewiderstand sinkt der Sauerstoffdruck (sollte nicht reiner Sauerstoff als erstes Betriebsgas verwendet wird, so sinkt nur der Sauerstoffpartialdruck) wohingegen der Druck des Wasserstoffs in den Anodengasräumen des Brennstoffzellenblocks konstant bleibt. Bei einem vorgegebenen Wert des Sauerstoffdrucks (bzw. Drucks des sauerstoffhaltigen Betriebsgases, der über einen festgelegten funktionalen Zusammenhang mit dem Sauerstoffpartialdruck zusammenhängt) wird die Zufuhr von Wasserstoff zum Brennstoffzellenblock unterbrochen. Der Wert des Sauerstoffdrucks (bzw. des ersten Betriebsgases) ist hierbei zweckmäßgerweise so gewählt, dass zum Zeitpunkt des Abschaltens der Wasserstoffzufuhr Wasserstoff und Sauerstoff im stöchiometrischen Verhältnis im Brennstoffzellenblock vorliegen. Durch die Aufrechterhaltung des Entladestroms reagieren somit der im Brennstoffzellenblock verbliebene Sauerstoff mit dem Wasserstoff vollständig zu Wasser.

Die Erfindung weist außerdem den Vorteil auf, dass durch die Zuschaltung eines solchen Entladewiderstandes der Strom aus der Restgasreaktion solange weiterfließen kann, bis die Restgase vollständig verbraucht sind. Dies liegt daran, dass ein ohmscher Widerstand auch bei sinkender Brennstoffzellenspannung bis hin zu kleinsten Zellespannüngen Strom führt. Dies wäre bei einem Verbrauch der Restgase durch eine Nutzlast, beispielsweise einen Motor, einen Akkumulator oder einen Stromsteller nicht möglich, da eine solche Nutzlast beim Unterschreiten der Spannung unter einen Grenzwert den Strom unterbricht. Es würde somit noch eine gewisse Menge Restgas in den Brennstoffzellen verbleiben.

Ein wie oben beschriebener dem Brennstoffzellenblock parallel zuschaltbarer elektrischer Widerstand weist außerdem den Vorteil auf, dass er sehr preiswert und mit einem äußerst geringen Aufwand in eine - eventuell noch andere Schutzkomponenten umfassende - Schutzeinrichtung der Gleichstromversorgungseinrichtung integriert werden kann. Die Zuschaltung des Entladewiderstands geschieht beispielsweise durch einen einfachen Schalter, der in dem Brennstoffzellenblock und den Entladewiderstand umfassenden elektrischen Stromkreis angeordnet ist.

Auch bei einem Betrieb der Brennstoffzellen mit einem nur wasserstoffhaltigen Brenngas und Luft als Betriebsgase ist die Erfindung effektiv. Mit Hilfe des Entladewiderstands können zwar die Restgase nicht vollständig verbraucht werden. Der in ihnen enthaltene Wasserstoff bzw. Sauerstoff wird jedoch vollständig verbraucht. Hierdurch wird der Korrosion der Brennstoffzellen im Ruhezustand durch Wasserstoff oder Sauerstoff entgegengewirkt.

In einer vorteilhaften Ausgestaltung der Erfindung umfasst die Schutzeinrichtung der Gleichstromversorgungseinrichtung einen ersten von einer Steuereinrichtung steuerbaren Schalter, durch den der elektrische Widerstand dem Brennstoffzellenblock parallel zuschaltbar ist. Während des normalen Betriebs der Gleichstromversorgungseinrichtung ist der elektrische Entladewiderstand dem Brennstoffzellenblock nicht parallel zugeschaltet, da der von dem Brennstoffzellenblock erzeugte elektrische Strom ansonsten durch den den Brennstoffzellenblock und den Entladewiderstand umfassenden Stromkreis fließen würde. Wird kein Strom mehr von der Gleichstromversorgungseinrichtung angefordert und ist die Zufuhr der Betriebsgase zum Brennstoffzellenblock geschlossen, so führt das Schließen des Schalters zum Verbrauch von Restgasen im Brennstoffzellenblock. Die Steuerung dieses ersten Schalters wird von der Steuereinrichtung übernommen, wodurch die Steuerung des ersten Schalters in einfache Weise an weitere Verfahrensschritte zum Abschalten des Brennstoffzellenblocks gekoppelt werden kann. Vorteilhafterweise ist die Steuereinrichtung auch dazu vorgesehen, das Unterbrechen der Betriebsgaszufuhr zum Brennstoffzellenblock zu steuern. Hierdurch werden zwei in direktem Zusammenhang stehende Verfahrensschritte zum Abschalten des Brennstoffzellenblocks von lediglich einer Steuereinrichtung gesteuert.

Mit Vorteil weist die Schutzeinrichtung einen zweiten von der Steuereinrichtung steuerbaren Schalter auf, mit dem ein die Gleichstromversorgungseinrichtung und einen elektrischen Verbraucher umfassender Stromkreis schließbar ist. Während des Betriebs der Gleichstromversorgungseinrichtung steht die Gleichstromversorgungseinrichtung in einem geschlossen Stromkreis mit einem Verbraucher, der beispielsweise ein Antriebsaggregat, ein Akkumulator oder auch ein Stromrichter sein kann. Die Gleichstromversorgungseinrichtung kann gegebenenfalls auch mit einem Gleichstromnetz verbunden sein, an das Verbraucher angeschlossen sind. Der Einfachheit halber wird ein solches Gleichstromnetz im Folgenden auch als "elektrischer Verbraucher" bezeichnet. Im Falle eines Abschaltens des Brennstoffzellenblocks ist es sinnvoll, die Gleichstromversorgungseinrichtung von dem Verbraucher zu trennen. Dies kann dadurch geschehen, dass der elektrische Stromkreis, in der die Gleichstromversorgungseinrichtung und der elektrische Verbraucher angeordnet sind, unterbrochen wird oder aber auch dadurch, dass die Gleichstromversorgungseinrichtung vollständig vom Verbraucher elektrisch getrennt wird. Mit einer solchen Trennung oder Unterbrechung des Stromkreises kann eine Entfernung der Restgase aus dem Brennstoffzellenblock sinnvoll werden. Daher ist es von Vorteil, wenn das Trennen oder Unterbrechen des Stromkreises und das Zuschalten des Entladewiderstandes zum Brennstoffzellenblock von einer einzigen Steuereinheit gesteuert und zweckmäßigerweise auch überwacht wird.

In einer weiteren vorteilhaften Variante der Erfindung weist die Gleichstromversorgungseinrichtung mehrere parallel geschaltete Brennstoffzellenblöcke auf, wobei der elektrische Widerstand allen Brennstoffzellenblöcken parallel zuschaltbar ist. Es genügt somit ein einziger elektrischer Widerstand um die Entladung aller parallel geschalteten Brennstoffzellenblöcke zu gewährleisten.

In weiterer vorteilhafter Ausgestaltung der Erfindung umfasst die Gleichstromversorgungseinrichtung mehrere seriell geschaltete Brennstoffzellenblöcke, wobei der elektrische Widerstand allen Brennstoffzellenblöcken parallel zuschaltbar ist. Durch ein in Serie Schalten mehrerer Brennstoffzellenblöcke wird die Spannung der einzelnen Blöcke addiert. Hierdurch kann einem Verbraucher Strom mit einer hohen Spannung zur Verfügung gestellt werden. Es ist hierbei nicht notwendig, jedem einzelnen Brennstoffzellenblock einen diesem Brennstoffzellenblock zugeordneten Entladewiderstand parallel zu schalten. Es ist ausreichend und kostensparend, der Serie der Brennstoffzellenblöcke einen einzigen Entladewiderstand in der Weise parallel zu schalten, dass der Entladewiderstand jedem einzelnen der Brennstoffzellenblöcke parallel geschaltet ist.

Zweckmäßigerweise ist jedem der Brennstoffzellenblöcke eine Leistungsdiode parallel geschaltet. Bei einem Abschalten der Gleichstromversorgungseinrichtung und einem damit eingeleiteten Verbrauch der in den Brennstoffzellenblöcken verbliebenen Restgase kann es vorkommen, dass in einem der Brennstoffzellenblöcke die Restgase bereits verbraucht sind, während in anderen Brennstoffzellenblöcken weiterhin Restgase vorhanden sind. Ein Brennstoffzellenblock, in dem keine Betriebsgase (oder Restgase) vorhanden sind, weist einen erhöhten elektrischen Widerstand auf. Bei in Serie geschalteten Brennstoffzellenblöcken behindert ein solcher Block den Stromfluss von den noch nicht vollständig von den Restgasen befreiten Brennstoffzellenblöcken zum Entladewiderstand und behindert somit den Verbrauch der Restgase in diesen Blöcken. Außerdem ist ein entladener Brennstoffzellenblock unter noch nicht entladenen ein Stromverbraucher. Eine solche Konstellation muss vermieden werden. Bei einer Schaltung einer Leistungsdiode, die dazu ausgelegt ist, den maximalen Strom aus den noch nicht entladenen Brennstoffzellenblöcken durchzuleiten, parallel zum bereits entleerten Brennstoffzellenblock, wird der Entladestrom aus den noch nicht entleerten Brennstoffzellenblöcken um den entleerten und hochohmigen Brennstoffzellenblock herumgeleitet. Während des regulären Betriebs der Gleichstromversorgungseinrichtung wird durch die Parallelschaltung einer Leistungsdiode zu jedem Brennstoffzellenblock erreicht, dass bei Ausfall eines Brennstoffzellenblocks der Strom aus den anderen Brennstoffzellenblöcken um diesen defekten Brennstoffzellenblock herumgeleitet wird. Hierdurch wird verhindert, dass bei Ausfall eines Brennstoffzellenblocks der Betrieb der gesamten Gleichstromversorgungseinrichtung zusammenbricht. Die Gleichstromversorgungseinrichtung verliert lediglich die Leistung des ausgefallenen Brennstoffzellenblocks.

Ein weiterer Vorteil wird dadurch erreicht, dass die Schutzeinrichtung eine dem Brennstoffzellenblock seriell angeordnete Leistungsdiode umfasst. Bei einer Gleichstromversorgungseinrichtung, die an ein Gleichstromnetz angeschlossen ist, kann es vorkommen, dass die Spannung des Gleichspannungsnetzes die von der Gleichstromversorgungseinrichtung aufgebaute Spannung übersteigt. Dies ist beispielsweise dann der Fall, wenn eins oder mehrere der Brennstoffzellenblöcke der Gleichstromversorgungseinrichtung ausgefallen oder abgeschaltet sind. Eine zu dem Brennstoffzellenblock oder zu den Brennstoffzellenblöcken seriell angeordnete Leistungsdiode verhindert, dass der Strom aus dem Gleichstromnetz in unerwünschte Richtung durch den Brennstoffzellenblock hindurchgetrieben wird. Ein von Restgasen befreiter Brennstoffzellenblock weist jedoch einen Widerstand auf, der im Bereich des Sperrwiderstands der seriell angeordneten Leistungsdiode oder aber auch darüber liegt. Hierdurch würde die Spannung aus dem Gleichstromnetz über den Sperrwiderstand der Leistungsdiode auch an den Brennstoffzellenblock gelegt und würde einen geringen Strom durch die in Sperrrichtung gepolte Leistungsdiode durch den Brennstoffzellenblock treiben. Durch die Parallelschaltung eines Entladewiderstandes zum Brennstoffzellenblock wird dieser Diodensperrstrom an dem Brennstoffzellenblock vorbeigeleitet. Die maximale mögliche Spannung an dem Brennstoffzellenblock wird dabei nahezu auf Null gehalten, da der Widerstandswert des Entladewiderstandes klein gegenüber dem Sperrwiderstand der Leistungsdiode ist.

Zweckmäßigerweise weist der elektrische Widerstand einen Widerstandswert zwischen 1 Ohm und 85 Ohm auf. Es hat sich in Versuchen gezeigt, dass ein solcher Widerstandswert sowohl beim Entladen der Restgase aus dem Brennstoffzellenblock als auch zum Verhindern eines unerwünschten Stromflusses in Sperrrichtung der Leistungsdiode durch den Brennstoffzellenblock günstig ist.

In einer vorteilhaften Ausgestaltung der Erfindung weist der elektrische Widerstand einen variabel einstellbaren und von der Steuereinrichtung steuerbaren Widerstandswert auf. Bei einem solchen Widerstand kann beispielsweise der Strom durch den Widerstand im Verlaufe des Entladungsvorgangs des Brennstoffzellenblocks und somit die Wärmeentwicklung im Widerstand konstant gehalten werden. Außerdem kann durch einen variablen Widerstand der Widerstandswert an die jeweiligen Bedürfnisse - beispielsweise das Entladen des Brennstoffzellenblocks oder das weitgehende Verhindern eines in Sperrrichtung der seriellen Leistungsdiode fließenden Stromes durch den Brennstoffzellenblock - angepasst werden.

In vorteilhafter Ausgestaltung der Erfindung werden die Gasräume des Brennstoffzellenblocks nach dem Unterbrechen der Zufuhr des zweiten Betriebsgases mit einem Inertgas befüllt. Hierdurch wird verhindert, dass in die evakuierten Betriebsgasräume unerwünschte Gase beispielsweise aus oder durch Dichtungsmaterialien des Brennstoffzellenblocks hineinströmen. Als Inertgas kann beispielsweise Stickstoff oder auch Argon verwendet werden.

Ausführungsbeispiele der Erfindung werden anhand von drei Figuren näher erläutert. Es zeigen

FIG 1 eine Gleichstromversorgungseinrichtung mit einem Brennstoffzellenblock und einem Entladewiderstand;

FIG 2 eine Gleichstromversorgungseinrichtung mit mehreren in Serie geschalteten Brennstoffzellenblöcken;

FIG 3 eine Gleichstromversorgungseinrichtung mit mehreren parallel geschalteten Brennstoffzellenblöcken.

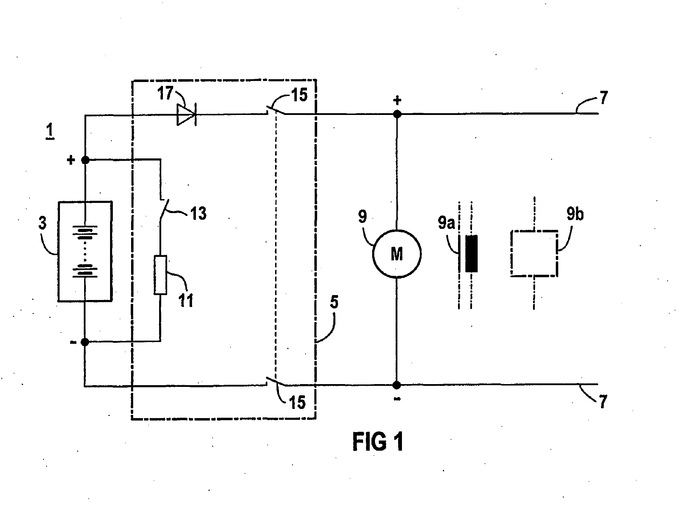

Figur 1 zeigt eine Gleichstromversorgungseinrichtung 1 mit einem Brennstoffzellenblock 3 und einer Schutzeinrichtung 5. Der Brennstoffzellenblock ist dafür vorgesehen, mit reinem Sauerstoff und reinem Wasserstoff als Betriebsgase betrieben zu werden. Die Gleichstromversorgungseinrichtung 1 ist an ein Gleichstromnetz 7 angeschlossen, das unter anderem einem elektrischen Verbraucher 9 aufweist. Der elektrische Verbraucher 9 ist beispielsweise ein Elektromotor oder auch ein Stromsteller 9a oder ein Akkumulator 9b. Die Schutzeinrichtung 5 weist einen elektrischen Widerstand 11 auf, der mit einem Schalter 13 dem Brennstoffzellenblock 3 parallel zuschaltbar ist. Außerdem weist die Schutzeinrichtung 5 einen zweiten Schalter 15 auf, durch den der Brennstoffzellenblock 3 vom Gleichstromnetz 7 und dem Verbraucher 9 elektrisch trennbar ist. Sowohl der erste Schalter 13 wie auch der zweite Schalter 15 sind von einer nicht in der Figur dargestellten Steuereinrichtung steuerbar. Des Weiteren umfasst die Schutzeinrichtung 5 eine dem Brennstoffzellenblock seriell angeordnete Leistungsdiode 17. In dem Fall, dass die im Gleichstromnetz 7 anliegende Spannung größer ist, als die vom Brennstoffzellenblock 3 erzeugte Spannung, verhindert der Sperrwiderstand der Leistungsdiode 17 weitgehend einen Stromfluss durch den Brennstoffzellenblock 3.

Während des regulären Betriebs der Gleichstromversorgungseinrichtung 1 ist der Schalter 15 geschlossen, so dass die Gleichstromversorgungseinrichtung 1 mit dem Gleichstromnetz 7 verbunden ist. Außerdem ist der erste Schalter 13 geöffnet, so dass der im Brennstoffzellenblock 3 erzeugte elektrische Strom nicht durch den elektrischen Widerstand 11 fließen kann. In dem Fall, dass von der Gleichstromversorgungseinrichtung 1 kein Strom mehr angefordert wird, wird von der in Figur nicht näher dargestellten Steuereinrichtung ein Steuerpuls an den zweiten Schalter 15 gegeben, der daraufhin öffnet und den Brennstoffzellenblock 3 vom Gleichstromnetz 7 trennt. Dies geschieht zweckmäßigerweise bevor der elektrische Widerstand dem Brennstoffzellenblock parallel geschaltet wird. Hierdurch wird der Brennstoffzellenblock von der im elektrischen Verbraucher herrschenden Spannung getrennt und kann somit unabhängig vom Zustand des elektrischen Verbrauchers abgeschaltet werden. Außerdem wird von der Steuereinrichtung ein Steuerpuls an den ersten Schalter 13 gegeben, der daraufhin schließt und den elektrischen Widerstand 11 somit dem Brennstoffzellenblock 3 parallel zuschaltet. Des Weiteren wird von der Steuereinrichtung veranlasst, dass die Zufuhr des kathodenseitigen Betriebsgases, also die Zufuhr von Sauerstoff, zum Brennstoffzellenblock 3 unterbrochen wird. Im Brennstoffzellenblock 3 reagieren nun Wasserstoff und Sauerstoff weiterhin in einem elektrochemischen Prozess, wobei der durch diesen Prozess erzeugte elektrische Strom durch den Entladewiderstand 11 getrieben wird, der ein Großteil der elektrischen Energie in Wärme umwandelt.

Der Entladewiderstand 11 weist einen variabel einstellbaren Widerstandswert auf, wobei die Größe dieses Wertes von der Steuereinrichtung gesteuert wird. Während der elektrochemische Prozess im Brennstoffzellenblock 3 aufrechterhalten bleibt, sinkt der Sauerstoffdruck im Brennstoffzellenblock 3. Bei Unterschreiten des Sauerstoffdrucks unter einen vorgegebenen Wert wird von der Steuereinrichtung das Schließen der

Zufuhr des anodenseitigen Betriebsgases zum Brennstoffzellenblock veranlasst. Im weiteren Verlauf des Abschaltens des Brennstoffzellenblocks reagieren die im Brennstoffzellenblock 3 verbleibenden Restgase vollständig, so dass nach einer Weile so gut wie kein Wasserstoff und so gut wie kein Sauerstoff mehr im Brennstoffzellenblock 3 vorhanden ist. Der Wasserstoffpartialdruck und der Sauerstoffpartialdruck werden von einer Steuereinrichtung überwacht und bei Unterschreiten der Partialdrücke unter einen jeweils vorgegebenen Wert wird von einer Steuereinrichtung die Zufuhr eines Inertgases zum Brennstoffzellenblock 3 geöffnet. als Inertgas wird Stickstoff verwendet. Die Gasräume des Brennstoffzellenblocks 3 füllen sich somit mit Stickstoff bis zu einem vorgegebenen Druck. In diesem Zustand ruht der Brennstoffzellenblock 3.

Während des regulären Betriebs der Gleichstromversorgungseinrichtung 1 wird der Stromfluss vom Brennstoffzellenblock 3 zum Gleichstromnetz 7 durch die Leistungsdiode 17 nicht gehemmt. Unterschreitet jedoch die vom Brennstoffzellenblock 3 erzeugte Spannung den Spannungswert des Gleichstromnetzes 7, so sorgt der Sperrwiderstand der Leistungsdiode 17 dafür, dass kein signifikanter Strom in gegenläufiger Richtung durch den Brennstoffzellenblock 3 hindurch getrieben wird. Bei einem vollständigen Ausfall des Brennstoffzellenblocks 3 jedoch weist der Brennstoffzellenblock 3 einen sehr hohen elektrischen Widerstand auf. Dieser Widerstand kann über dem Sperrwiderstand der Leistungsdiode 17 liegen. Hierdurch würde sich auch eine durch das Gleichstromnetz 7 erzeugte Spannung am Brennstoffzellenblock 3 aufbauen und einen signifikanten Strom durch den Brennstoffzellenblock 3 hindurchtreiben. In einem solchen Fall wird der erste Schalter 13 von der Steuereinrichtung geschlossen, so dass der durch die Leistungsdiode 17 in Sperrrichtung hindurchfließende elektrische Strom durch den elektrischen Widerstand 11 durchgeführt wird. Die am Brennstoffzellenblock 3 anliegende Spannung $U_M$ wird durch den Entladewiderstand 11 somit reduziert auf

$$U_M = U_{DC} \frac{R_E}{R_R + R_E}$$

mit

    $U_{DC}$: Spannung des Gleichstromnetzes 7
    $R_E$: Widerstandswert des Entladewiderstands 11
    $R_R$: Widerstand der Leistungsdiode 17 in Sperrrichtung.

Da der Entladewiderstand 11 einen Widerstandswert $R_E$ aufweist, der wesentlich geringer ist als der Widerstand $R_R$ der Diode 17 in Sperrrichtung, ist die am Brennstoffzellenblock 3 anliegende Spannung $U_M$ gering.

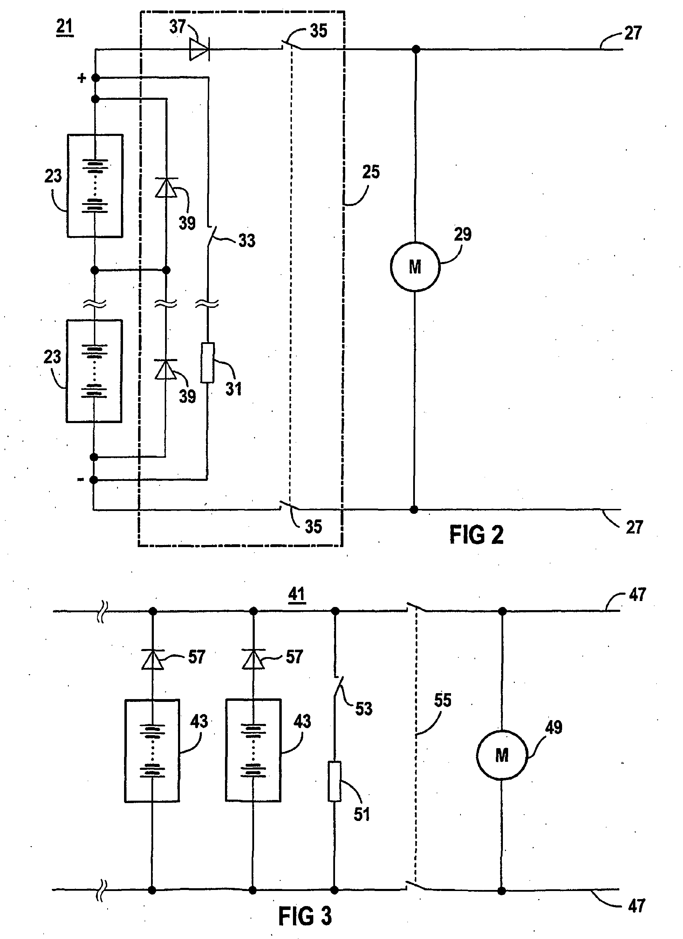

In Figur 2 ist eine Gleichstromversorgungseinrichtung 21 dargestellt, die mehrere Brennstoffzellenblöcke 23 umfasst, von denen jedoch lediglich zwei dargestellt sind. Außerdem umfasst die Gleichstromversorgungseinrichtung 21 eine Schutzeinrichtung 25. Die Gleichstromversorgungseinrichtung 21 ist an ein Gleichstromnetz 27 angeschlossen, das einen elektrischen Verbraucher 29 aufweist. Die Schutzeinrichtung 25 umfasst einen elektrischen Widerstand 31, der allen Brennstoffzellenblöcken 23 mit Hilfe eines ersten Schalters 33 parallel zuschaltbar ist. Der elektrische Widerstand 31 weist einen Widerstandswert von 8 Ohm auf. Desweiteren weist die Schutzeinrichtung 25 einen zweiten Schalter 35 auf, durch den die Brennstoffzellenblöcke 23 vom Gleichstromnetz 27 trennbar sind. Mit Hilfe des elektrischen Widerstands 31 wird erreicht, dass mit einem wie oben beschriebenen Verfahren die Brennstoffzellenblöcke 23 in der Weise abgeschaltet werden können, dass der Sauerstoff und der Wasserstoff der in den Brennstoffzellenblöcken 23 befindlichen Restgase vollständig aufgebraucht werden, so dass sich in einem Ruhezustand der Brennstoffzellenblöcke 23 so gut wie kein Sauerstoff und Wasserstoff mehr in den Blöcken 23 befindet.

Jedem der Brennstoffzellenblöcke 23 ist eine Leistungsdiode 39 parallel geschaltet. Sollte einer der Brennstoffzellenblöcke 23 während des Abschaltvorgangs - oder auch während des regulären Betriebs - spannungslos werden, wohingegen die anderen Brennstoffzellenblöcke 23 einen elektrischen Strom erzeugen, so wird durch die dem spannungslosen Brennstoffzellenblock 23 parallel geschaltete Leistungsdiode 39 erreicht, dass der in den übrigen Brennstoffzellenblöcken 23 erzeugte Strom weiterhin dem elektrischen Widerstand 31 bzw. dem Gleichstromnetz 27 zugeführt wird. Der elektrische Widerstand 31 sorgt in Verbindung mit der Leistungsdiode 37 außerdem dafür, dass beim Abschalten eines Blocks (oder auch im regulären Betrieb) nicht mehr als nur unerheblicher Strom aus dem Gleichstromnetz 27 in unerwünschter Richtung durch die Brennstoffzellenblöcke 23 hindurchgetrieben wird.

Figur 3 zeigt eine Gleichstromversorgungseinrichtung 41, die eine Anzahl von Brennstoffzellenblöcken 43 umfasst, von denen lediglich zwei gezeigt sind. Die Gleichstromversorgungseinrichtung 41 ist an ein Gleichstromnetz 47 angeschlossen, das einen elektrischen Verbraucher 49 aufweist. Die Gleichstromversorgungseinrichtung umfasst einen elektrischen Widerstand 51, der mit Hilfe eines ersten Schalters 53 den Brennstoffzellenblöcken 43 parallel zuschaltbar ist. Mit Hilfe eines zweiten Schalters 55 ist die Gleichstromversorgungseinrichtung 41 von dem Gleichstromnetz 47 trennbar.

Die Brennstoffzellenblöcke 43 sind parallel geschaltet, wobei zu jedem der Brennstoffzellenblöcke 43 eine Leistungsdiode 57 seriell angeordnet ist. Mit Hilfe des elektrischen Widerstands 51 im Zusammenhang mit dem ersten Schalter 53 wird erreicht, dass bei einem Abschalten der Brennstoffzellenblöcke 43 der in den Blöcken 43 verbleibende Rest an Sauerstoff und Wasserstoff vollständig verbraucht werden kann. Die Leistungsdioden 57 sorgen in Verbindung mit dem Widerstand 51 dafür, dass bei einem Ausfall eines der Brennstoffzellenblöcke 43 kein Strom in unerwünschter Richtung durch diesen ausgefallenen Block 43 hindurchgetrieben wird.

**Patentansprüche**

**1.** Gleichstromversorgungseinrichtung (1, 21, 41) mit einem Brennstoffzellenblock (3, 23, 43) und einer Abschalt-Schutzeinrichtung (5, 25) mit einem dem Brennstoffzellenblock (3, 23, 43) parallel zuschaltbaren elektrischen Widerstand (11, 31, 51) **dadurch gekennzeichnet, dass** eine Steuervorrichtung vorgesehen ist, durch welche die Zufuhr eines ersten Betriebsgases zu dem Brennstoffzellenblock (3, 23, 43) und die Zufuhr eines zweiten Betriebsgases zu dem Brennstoffzellenblock (3, 23, 43) in Abhängigkeit vom Partialdruck des ersten Betriebsgases in dem Brennstoffzellenblock (3, 23, 43) unterbrechbar ist.

2. Gleichstromversorgungseinrichtung (1, 21, 41) nach Anspruch 1, **dadurch gekennzeichnet, dass** die Schutzeinrichtung (5, 25) einen ersten von der Steuereinrichtung steuerbaren Schalter (13, 33, 53) umfasst, durch den der elektrische Widerstand (11, 31, 51) dem Brennstoffzellenblock (3, 23, 43) parallel zuschaltbar ist.

3. Gleichstromversorgungseinrichtung (1, 21) nach Anspruch 2, **dadurch gekennzeichnet, dass** die Schutzeinrichtung (5, 25) einen zweiten von der Steuereinrichtung steuerbaren Schalter (15, 35) aufweist, mit dem ein die Gleichstromversorgungseinrichtung (1, 21) und einen elektrischen Verbraucher (9, 29) umfassender Stromkreis betriebsmäßig schließbar und bei Abschaltung des Brennstoffzellenblocks (3, 23, 43) unterbrechbar ist.

4. Gleichstromversorgungseinrichtung (41) nach einem der vorhergehenden Ansprüche, **gekennzeichnet durch** mehrere parallel geschaltete Brennstoffzellenblöcke (43), wobei der elektrische Widerstand (51) allen Brennstoffzellenblöcken (43) parallel zuschaltbar ist.

5. Gleichstromversorgungseinrichtung (21) nach einem der vorhergehenden Ansprüche, **gekennzeichnet durch** mehrere seriell geschaltete Brennstoffzellenblöke (23), wobei der elektrische Widerstand (31) allen Brennstoffzellenblöcken (23) parallel zuschaltbar ist.

6. Gleichstromversorgungseinrichtung (21) nach Anspruch 5, **dadurch gekennzeichnet, dass** jedem der Brennstoffzellenblöcke (23) eine Leistungsdiode (39) parallel geschaltet ist.

7. Gleichstromversorgungseinrichtung (1, 21) nach einem der vorhergehenden Ansprüche, **dadurch gekennzeichnet, dass** die Schutzeinrichtung (5, 25) eine dem Brennstoffzellenblock (3, 23) seriell angeordnete Leistungsdiode (17, 37) umfasst.

8. Gleichstromversorgungseinrichtung (1, 21, 41) nach einem der vorhergehenden Ansprüche, **dadurch**

**ge- kennzeichnet**, dass der elektrische Widerstand (11, 31, 51) einen Widerstandswert zwischen 1 Ohm und 85 Ohm aufweist.

9. Gleichstromversorgungseinrichtung (1) nach einem der Ansprüche 2 bis 7, **dadurch gekennzeichnet, dass** der elektrische Widerstand (11) einen variabel einstellbaren und von der Steuereinrichtung steuerbaren Widerstandswert aufweist.

10. Gleichstromversorgungseinrichtung nach Anspruch 1, **gekennzeichnet durch** mit einem Inertgas nach Unterbrechung der Zufuhr des zweiten Betriebsgases befüllte Betriebsräume des Brennstoffzellenblocks (2, 23, 43).

**Claims**

1. Direct current power supply device (1, 21, 41) with a fuel cell block (3, 23, 43) and a switch-off protection device (5, 25) with an electrical resistor (11, 31, 51) which can be connected in parallel to the fuel cell block (3, 23, 43) **characterised in that** a control facility is provided, through which the feed of a first operating gas to the fuel cell block (3, 23, 43) and the feed of a second operating gas to the fuel cell block (3, 23, 43) can be interrupted as a function of the partial pressure of the first operating gas in the fuel cell block (3, 23, 43).

2. Direct current power supply device (1, 21, 41) according to claim 1, **characterised in that** the protection device (5, 25) comprises a first switch (13, 33, 53) which can be controlled by the control device, through which the electrical resistor (11, 31, 51) can be connected in parallel to the fuel cell block (3, 23, 43).

3. Direct current power supply device (1, 21) according to claim 2, **characterised in that** the protection device (5, 25) has a second switch (15, 35) which can be controlled by the control device, with which a power circuit comprising the direct current power supply device (1, 21) and an electrical load (9, 29) can be closed during normal operation and interrupted when the fuel cell block (3, 23, 43) is disconnected.

4. Direct current power supply device (41) according to one of the preceding claims, **characterised by** a number of fuel cell blocks (43) connected in parallel, wherein the electrical resistor (51) can be connected in parallel to all fuel cell blocks (43).

5. Direct current power supply device (21) according to one of the preceding claims, **characterised by** a number of fuel cell blocks (23) connected in series, wherein the electrical resistor (31) can be connected in parallel to all fuel cell blocks (23).

6. Direct current power supply device (21) according to claim 5, **characterised in that** a power diode (39) is connected in parallel to each of the fuel cell blocks (23).

7. Direct current power supply device (1, 21) according to one of the preceding claims, **characterised in that** the protection device (5, 25) comprises a power diode (17, 37) arranged in series with the fuel cell block (3, 23).

8. Direct current power supply device (1, 21, 41) according to one of the preceding claims, **characterised in that** the electrical resistor (11, 31, 51) has a resistance value between 1 ohm and 85 ohms.

9. Direct current power supply device (1) according to one of claims 2 to 7, **characterised in that** the electrical resistor (11) has a resistance value which can be variably set and controlled by the control device.

10. Direct current power supply device according to claim 1, **characterised by** operating areas of the fuel cell block (2, 23, 43) filled with an inert gas after the interruption of the feed of the second operating gas.

## Revendications

1. Dispositif ( 1, 21, 41 ) d'alimentation en courant continu, comprenant un bloc ( 3, 23, 43 ) de piles à combustible, et un dispositif ( 5, 25 ) de protection de mise hors-circuit ayant une résistance ( 11, 31, 51 ) électrique pouvant être montée en parallèle avec le bloc ( 3, 23, 43 ) de piles à combustible, **caractérisé en ce qu'**il est prévu un dispositif de commande, par lequel l'apport d'un premier gaz de fonctionnement au bloc ( 3, 23, 43 ) de piles à combustible et l'apport d'un deuxième gaz de fonctionnement au bloc ( 3, 23, 43 ) de piles à combustible peuvent être interrompus en fonction de la pression partielle du premier gaz de fonctionnement dans le bloc ( 3, 23, 43 ) de piles à combustible.

2. Dispositif ( 1, 21, 41 ) d'alimentation en courant continu suivant la revendication 1, **caractérisé en ce que** le dispositif ( 5, 25 ) de protection comprend un premier commutateur ( 13, 33, 53 ) qui peut être commandé par le dispositif de commande et par lequel la résistance ( 11, 31, 51 ) électrique peut être montée en parallèle avec le bloc ( 3, 23, 43 ) de piles à combustible.

3. Dispositif ( 1, 21 ) d'alimentation en courant continu suivant la revendication 2, **caractérisé en ce que** le dispositif ( 5, 25 ) de protection comporte un deuxième commutateur ( 15, 35 ) qui peut être commandé par le dispositif de commande et par lequel un circuit, comprenant le dispositif ( 1, 21 ) d'alimentation en courant continu et un utilisateur ( 9, 29 ) électrique, peut être fermé conformément au fonctionnement et peut être interrompu à la mise hors-circuit du bloc ( 3, 23, 43 ) de piles à combustible.

4. Dispositif ( 41 ) d'alimentation en courant continu suivant l'une des revendications précédentes, **caractérisé par** plusieurs blocs ( 43 ) de piles à combustible montés en parallèle, la résistance ( 51 ) électrique pouvant être montée en parallèle à tous les blocs ( 43 ) de piles à combustible.

5. Dispositif ( 21 ) d'alimentation en courant continu suivant l'une des revendications précédentes, **caractérisé par** plusieurs blocs ( 23 ) de piles à combustible montés en série, la résistance ( 31 ) électrique pouvant être montée en parallèle à tous les blocs ( 23 ) de piles à combustible.

6. Dispositif ( 21 ) d'alimentation en courant continu suivant la revendication 5, **caractérisé en ce qu'**une diode ( 39 ) de puissance est montée en parallèle avec chacun des blocs ( 23 ) de piles à combustible.

7. Dispositif ( 1, 21 ) d'alimentation en courant continu suivant l'une des revendications précédentes, **caractérisé en ce que** le dispositif ( 5, 25 ) de protection comprend une diode ( 17, 37 ) de puissance montée en série avec le bloc ( 3, 23 ) de piles à combustible.

8. Dispositif ( 1, 21, 41 ) d'alimentation en courant continu suivant l'une des revendications précédentes, **caractérisé en ce que** la résistance ( 11, 31, 51 ) électrique a une valeur comprise entre 1 Ohm et 85 Ohm.

9. Dispositif ( 1 ) d'alimentation en courant continu suivant l'une des revendications 2 à 7, **caractérisé en ce que** la résistance ( 11 ) électrique a une valeur réglable d'une manière variable et pouvant être commandée par le dispositif de commande.

10. Dispositif d'alimentation en courant continu suivant la revendication 1, **caractérisé par** des espaces de fonctionnement du bloc ( 2, 23, 43 ) de piles à combustible, remplis de gaz inerte après une interruption de l'apport du deuxième gaz de fonctionnement.

**FIG 1**

**FIG 2**

**FIG 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2129237 A